# EUROPEAN PATENT APPLICATION

(11) **EP 0 743 021 A2**
(43) Date of publication of application: **20.11.1996**
(21) Application number: 96107590.0
(22) Date of filing: 13.05.1996
(51) Int. Cl.: A41D 13/00

(54) **Safety device for a person transported on a vehicle or animal**

(30) Priority: 19.05.1995 IT TO950394
(71) Applicant: Venturini, Aldo, I-10017 MONTANARO (Torino) (IT)
(72) Inventor: Venturini, Aldo, I-10017 MONTANARO (Torino) (IT)
(74) Representative: Aprà, Mario

(57) **Abstract**

The device according to the invention comprises:
a) a means (11) of at least partial protection of the body of the person, which means is pneumatically inflatable at least in part (11.3) and worn in the deflated state, like a garment;
b) at least one reservoir of pressurized fluid (12), for example compressed air, worn by the person and provided with valve means (12.2) which normally close its fluid outlet (12.1) in a sealed manner and are controlled by violent traction in order to bring about the pneumatic opening of the outlet, which is pneumatically connected in an airtight manner to said safety means, and
c) flexible means (13, 12.6), for example in the form of cord-like members, for connection between said vehicle or animal and said valve means of said at least one reservoir, said flexible means being intended to be separated from said at least one reservoir after having caused said valve means to open said fluid outlet of the reservoir pneumatically,
   in such a manner that, when said person is involuntarily separated from said vehicle or animal, said safety means is instantly pneumatically inflated in order to protect the person.

## Description

The present invention relates to a safety device for a person transported on a vehicle or animal.

The expression "vehicle or animal" is here intended to mean not only any vehicle or animal suitable for transporting people but also any implement or the like which allows man to move, for example on snow, on the ground, or on water, such as skis, skateboards, surfboards or even a means floating on water in the manner of a life preserver, and many others.

The main aim of the present invention is to provide a safety means for a person transported on a vehicle or animal, which means protects the person against injury or trauma caused by ejection from the vehicle or animal (for example being thrown out of the interior of a car or being thrown from the saddle of a motor vehicle or of a moving horse).

Another aim is to provide a safety means as specified, which protects the person against injury or discomfort resulting from travelling in a vehicle or on an animal in unfavourable climatic conditions, in particular at relatively too low or relatively too high ambient temperature.

In view of these aims, the present invention provides a safety device for a person transported on a vehicle or animal, the essential characteristic of which forms the subject of the main claim which is understood to be incorporated here in full.

Further advantageous characteristics appear in the subordinate claims which are also understood to be incorporated here in full.

The present invention is described in detail in the following, with reference to the attached drawings which are provided by way of non-limiting example only and in which:
- Fig. 1 is a diagrammatic perspective view showing a motorcyclist provided with the safety device according to the invention connected to a motorcycle;
- Fig. 2 is a detailed view, on a larger scale, of the detail II in Fig. 1;
- Fig. 3 is a diagrammatic perspective view of the motorcyclist in Fig. 1, on a larger scale, with the safety device disconnected from the motorcycle and without a safety helmet, in which the broken lines illustrate pneumatic safety means incorporated in the device according to the invention, in the pneumatically deflated state;
- Fig. 4 is a view similar to that in Fig. 3 but in which said pneumatic safety means are illustrated in the pneumatically inflated state;
- Figures 5A and 5B illustrate in detail, on a larger scale and in vertical section, the structure of pneumatic reservoir means of the safety device according to the invention;
- Fig. 6 shows a diagrammatic perspective view of the safety device according to the invention, not worn by a person, in which the broken lines illustrate electric heating circuit means with which the device is provided;
- Fig. 7 is a block diagram illustrating electric means for control and selection of the electric feed for said heating circuit means of the device according to the invention;
- Fig. 8 is a view similar to that in Fig. 3 but illustrating an alternative embodiment of the safety device according to the invention.

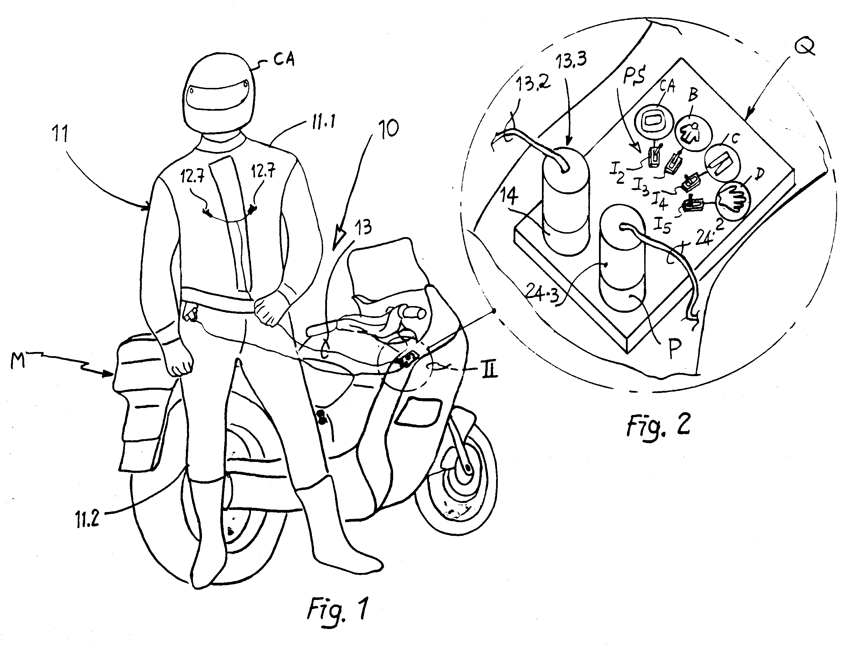

With reference to the drawings, the safety device according to the present invention is indicated as a whole by 10 (Fig. 1).

Said device 10 comprises, in the example illustrated and with reference also to Figures 2 to 4 and 5A, 5B:
- a means 11 of at least partial protection of the body, worn by a person like a suit (in the example it is a motorcyclist's suit),
- a pair of pneumatic reservoir means 12 containing a pressurized gas, constitued for example by two bottles of compressed air carried by the person himself, and
- a flexible member 13, for example an inextensible cord-like member made of "nylon" (registered name), the function of which will emerge in greater detail below.

Said suit-like means 11 of protection of the body comprises, in the example illustrated, a jacket 11.1 and a pair of trousers 11.2 with ankle boots. In this example, both the jacket 11.1 and the trousers 11.2 have, in the region of the joints of the body of the person who is wearing them, respective pneumatically inflatable airtight bags 11.3 like pneumatic cushions. Said pneumatic bags 11.3, made for example of plastic material, are incorporated into the material of the suit and are pneumatically connected together in an airtight manner by means of flexible pneumatic pipes 11.4, also made of plastic material for example and incorporated into the material of the suit. (It should be noted that other pneumatic bags, not illustrated, can be provided, for example, in the region of the cervical vertebrae or of the spinal column of the person). Pneumatic connection means 11.5 set in fluidtight communication, in a dismountable manner, respective terminal flexible pneumatic pipes 11.4' of the trouser part 11.2 and of the jacket part 11.1, so as to provide in the suit 11 a single pneumatic circuit 11.4'', through which a pressurized fluid (compressed air) can be distributed, entering the pneumatic bags 11.3.

Said pneumatic circuit 11.4'' has two inlets for pressurized fluid constituted by respective lengths of flexible pipe 11.6 emerging from the internal face of the suit 11 in the region of the person's shoulders. Said fluid inlets 11.6 are connected in a gastight manner to corresponding outlets for pressurized fluid 12.1 provided at the top of the two compressed air bottles 12 which are fixed on the internal face of the chest part of the suit 11.

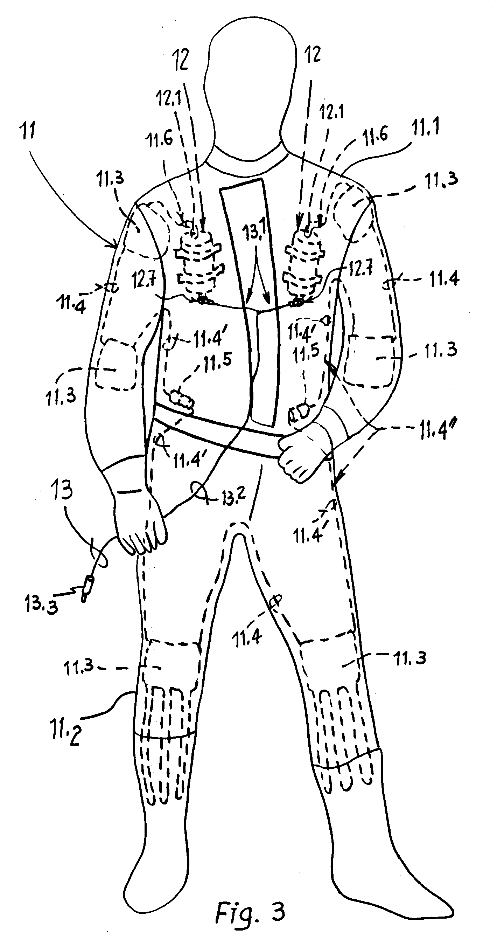

The person wears the suit 11 in the pneumatically deflated state, as shown in Fig. 3.

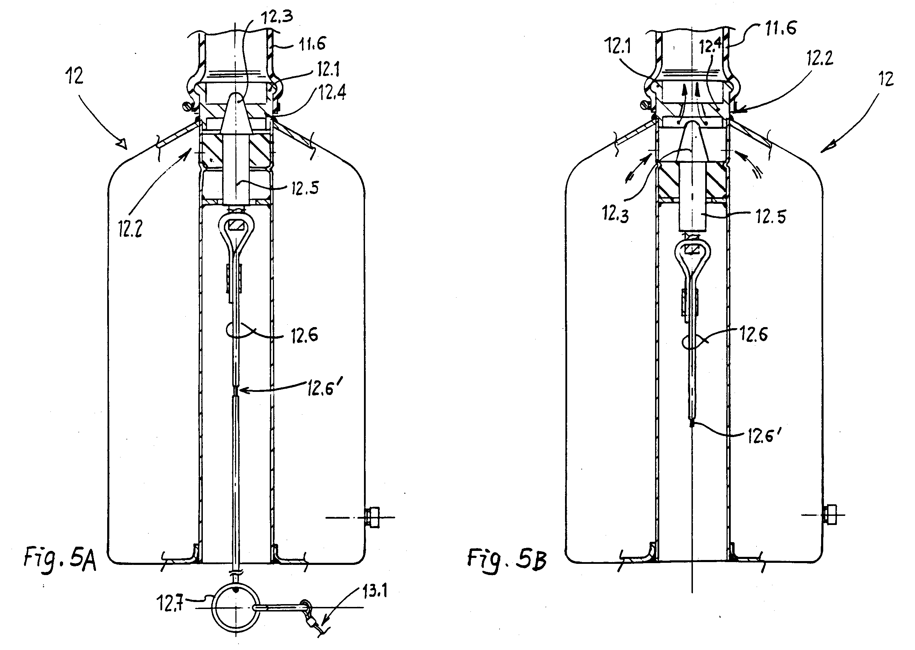

Said bottles 12 are each provided with valve means 12.2 (Figs 5A, 5B) which close the respective fluid outlet 12.1 in a sealed manner and can be opened by tearing or by means of violent traction. For example, according to the example illustrated, said valve means 12.2 are of the type with a pin shutter 12.3 which is normally arranged in a manner closing a corresponding valve seat 12.4 in the outlet 12.1 (Fig. 5A). To the valve, the shutter 12.3 is made to slide in retraction in relation to the valve seat 12.4. To this end, said pin shutter 12.3 is connected, by means of a stem 12.5, to flexible traction means 12.6, for example cord means, which emerge from the bottom of the respective bottle 12 and are equipped at their free end with a traction ring 12.7. Said traction ring 12.7 is arranged on the external face of the chest part of the suit 11.

Said flexible member 13 essentially has - in the extended state - a T shape and the free ends of its horizontal branch 13.1 are firmly connected respectively to said traction rings 12.7. The connection between flexible member 13 and rings 12.7 is made, for example, by means of spring catch means so as to be safe and easily dismountable.

At the free end of the vertical branch 13.2 of the T, said flexible member 13 has a threaded pin 13.3 for the connection, by means of helical coupling, in a corresponding threaded hole of a connection bush 14 (Fig. 2) which is fixed relative to the chassis of a motorcycle M.

Said flexible traction means 12.6 have a tensile strength which is significantly lower than that of the flexible member 13 so as to break with ease (predetermined break point 12.6') after a traction force applied via said same member 13 has brought about the retraction of the shutter 12.3 into the position of pneumatic opening of the respective valve 12.2 (Fig. 5B).

As can be seen from the above, the motorcyclist who is wearing the suit 11 can connect himself to the motorcycle M by means of the flexible member 13, the means of traction 12.6 and the bottles 12, fixed to the suit. If, connected up in this way, the motorcyclist is thrown, by accident, from the saddle of the motorcycle, he tensions the flexible member 13 and the means of traction 12.6, first making the valve means 12.2 of the reservoirs 12 of pressurized fluid "open" and then breaking the means of traction 12.6 themselves, in the region of the zone 12.6'.

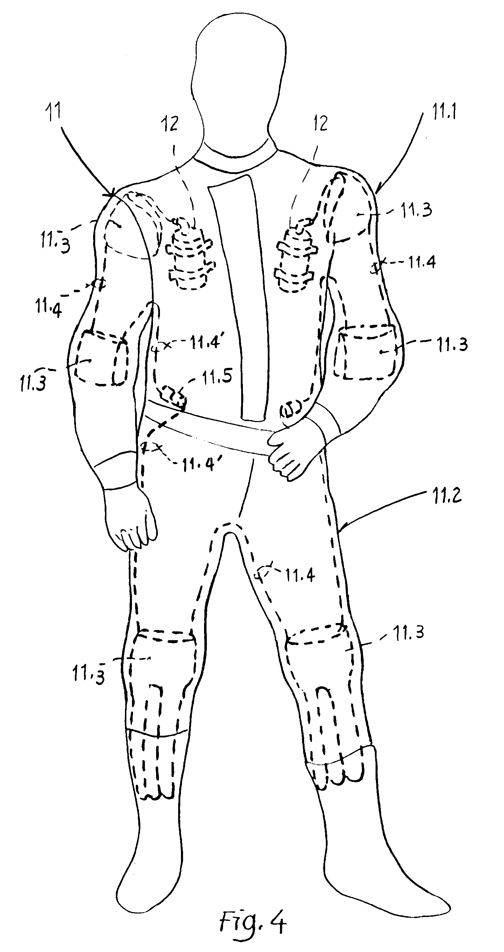

The motorcyclist is then released from his connection to the motorcycle M while the pneumatic bags 11.3 are instantaneously and automatically inflated by the pressurized gas which emerges from the reservoirs 12. Said inflated bags 11.3 provide pneumatic cushions in the suit 11 which protect the body of the motorcyclist in the region of the joints during his fall (Fig. 4).

The pneumatic circuit 11.4'' is provided with pneumatic valve means for fluid discharge (known per se and not illustrated) which are controlled manually and which make it possible to return the bags 11.3 to the pneumatically deflated state (Fig. 3) once the condition of danger to the person has ceased. In this way, the device 10 can be reused once the bottles of compressed air 12 have been refilled or replaced.

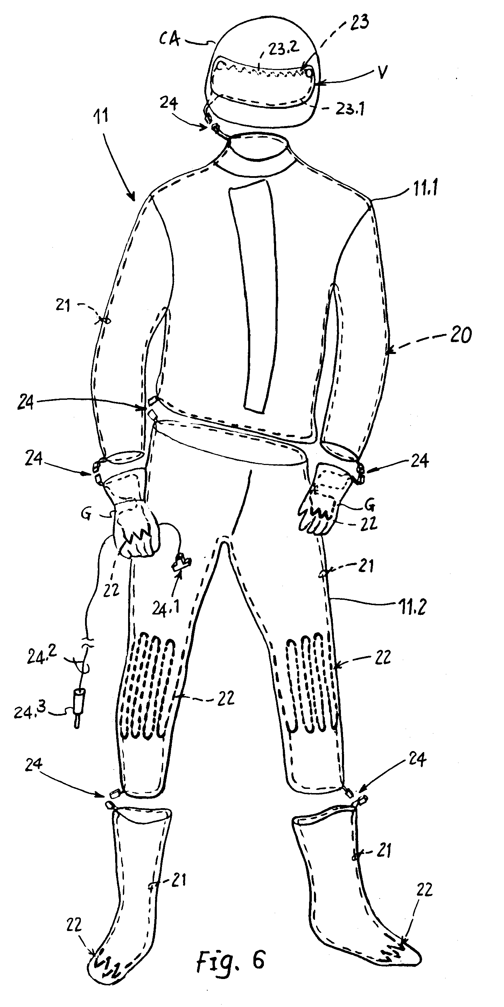

With reference now also to Figures 2, 6 and 7, an electric circuit arrangement 20 is also incorporated in the suit 11, which circuit is electrically insulated and includes conductors 21 which connect together resistors 22 that are provided for example in the region of the feet, of the knees and of the hands of the person who is wearing the suit 11 and that bring about - when an electric current is passed through them - a thermal heating in these zones, for example by means of the Joule effect. An electric circuit arrangement 23 is also provided in the visor V of the motorcyclist's helmet CA, and has electrically insulated electric conductors 23.1 and resistors 23.2 for heating said visor, in order to demist it. Between the various branches of said electric circuit arrangement 20 in the suit 11 (or circuit branch in the jacket 11.1, circuit branch in the trousers 11.2 with ankle boots and circuit branch in the gloves G), just as between the circuit branch of the jacket 11.1 and the circuit arrangement 23 of the helmet CA, electric connection means in the form of male/female electric pins 24 are provided, which can be mutually connected and disconnected to establish or interrupt the supply of electric current to the resistors 22, 23.2. In particular, between the pins 24 of the circuit branch in the jacket 11.1 and that in the trousers 11.2, a three-way electric connector 24.1 is provided which - by means of an electric supply cable 24.2 - allows the electric connection of said circuit arrangements 20 and 23 to the accumulator battery of the motorcycle M. This electric connection is made by means of an electric connection pin 24.3 which is provided at the free end of the supply cable 24.2 and which is inserted into a corresponding current socket P provided in a control panel Q on said motorcycle.

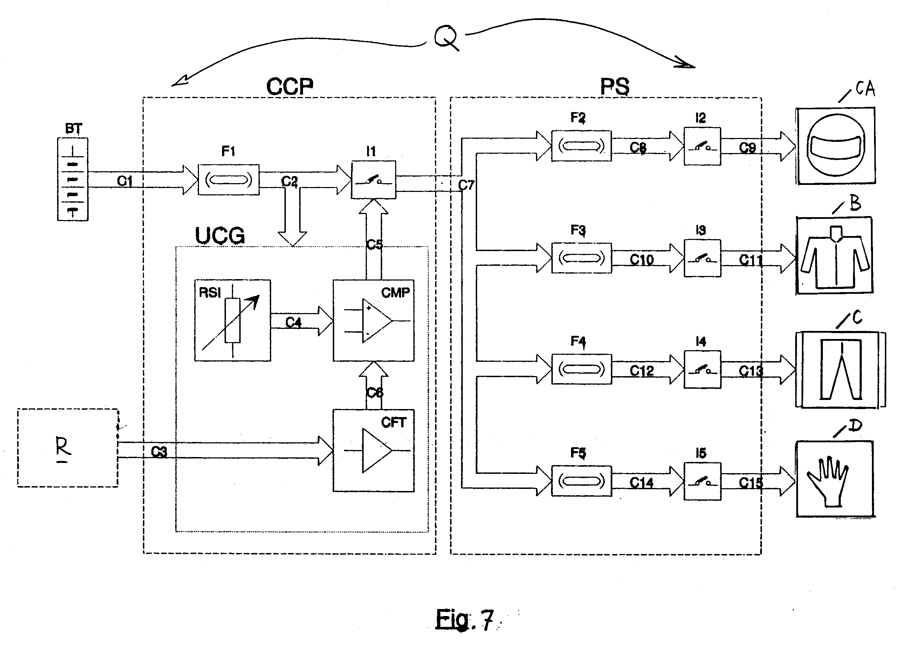

With reference in particular to Fig. 7, the electric circuit structure of said control panel Q, provided, for example, at a point of the fairing of the motorcycle M close to the handlebars, is explained below.

Said control panel Q comprises a central electronic power control unit CCP and a selection panel PS which are electrically interconnected.

In particular, the battery BT of the motorcycle M is electrically connected, by means of an electric connection C1, to a general fuse F1 of the central unit CCP, which, by means of an electric connection C2, supplies an electric underload cutout I1 and an engine speed control unit UCG.

Provided in said engine speed control unit are frequency/voltage converter means CFT which, by means of an electric connection C3, pick up pulses from a means R for picking up pulses or synchronizing signals of the engine (for example, from the contact breaker) and convert their frequency into a level of electric voltage proportional to the frequency itself.

Said level of electric voltage is applied, by means of a connection C6, to a first input of comparator means CMP. A level of voltage supplied by intervention threshold regulator means RSI is applied to another input of said comparator means CMP by means of an electric connection C4.

When the electric voltage level supplied by the frequency/voltage converter means CFT exceeds the electric voltage level supplied by the intervention threshold regulator means RSI, a switching of logic state at the output of the comparator means CMP takes place, which, by means of an electric connection C5, in turn brings about the switching of the cutout I1 so as to supply the selection panel PS electrically by means of an electric connection C7. Operation in reverse takes place when the level of voltage supplied by CFT is lower than the level of voltage supplied by RSI.

Therefore, a certain electric voltage level, set on the intervention threshold regulator means RSI, corresponds to a certain synchronizing signal frequency and therefore to a given speed of the engine of the motorcycle M.

As can be easily understood, by regulating the RSI means, it is possible to make the cutout I1 intervene only above a given engine speed.

By means of this arrangement, electrical supply to the resistors 22, 23.2 of the suit 11 is avoided, for example, when the engine of the motorcycle M is running "at minimum", in order not to discharge the battery BT.

The selection panel PS comprises, in the example illustrated, four electric connection lines C8, C10, C12, C14, each electrically protected by means of a respective fuse, from F2 to F5, to which the electric connection line C7 is branched, in output from the cutout I1. Each electric connection line C8, C10, C12, C14 is applied to the input of a respective cutout, from I2 to I5, to control the electric supply to the circuit arrangement 23 and of a corresponding circuit branch of said circuit arrangement 20; for example, the cutout I2 controls the circuit arrangement 23 in the helmet CA, the cutout I3 controls the branch B in the jacket 11.1, the cutout I4 the branch C in the trousers 11.2 and the cutout I5 the branch D in the gloves G. By means of these cutouts I2 - I5, the user can select to heat one or more parts of the body in the suit 11, by electrically supplying the corresponding resistors 22, 23.2. It is thus possible to save electric energy and make the suit 11 and the helmet CA more comfortable.

As an alternative to the abovementioned central power control unit CCP of the control panel Q, it is possible to provide on the motorcycle M an arrangement of inertia regulator means, for example inertial electric cutouts, which are electrically connected so as electrically to open and close the electric circuit branched from the battery BT to the circuit arrangements 20 and 23 according to the speed or number of revolutions of the engine of the motorcycle M. By means of these inertia regulator means, it is possible to supply the circuit arrangements 20 and 23 electrically only when the motor vehicle is in motion, avoiding discharging the battery of the same.

As an alternative, to simplify the circuit arrangement 20 structurally, it is possible to use, instead of insulated electric conductors and insulated resistors, for example a single autoregulating heating cable (known, for example, on the market under the name "Chemelex Autotrace" and produced by Raychem, California, U.S.A.).

Said autoregulating heating cable, which can run through the entire circuit arrangement 20, comprises:
- two tinned copper conductors which have the sole function of supplying the cable and are incorporated in a core consisting of a polymer mixed with graphite particles which constitutes the heating part,
- an internal insulating sheath, applied to said core, consisting of polyolefin or fluoropolymer,
- a tinned copper braiding on said sheath, which constitutes a mechanical protection and ensures earthing of the cable,
- an external sheath made of polyolefin or of fluoropolymer.

In said cable, at low temperature, the graphite particles constitute connections in parallel between the two conductors made of tinned copper. When voltage is applied to the conductors, the cable starts to heat up, generating heat. As the temperature rises, the polymeric core starts to expand at microscopic level, breaking the graphite connections between the copper conductors. This results in an increase in the resistance of the cable, as a result of which the absorption and therefore the heat generated decrease, until a thermal equilibrium is reached between the thermal losses of the suit 11 and the thermal power produced by the cable. This process is reversible: when the cable cools, the connections between the copper conductors are re-established, the resistance therefore decreases and the cable absorbs more power. This autoregulating characteristic, which depends on the "memory" of its core, to expand and contract according to the temperature, ensures that the cable cannot overheat. Moreover, it does not require thermostat means.

Furthermore, the power of the abovementioned cable is independent of its length, and it is very flexible and light. As an alternative to the circuit arrangement 20, it is possible to incorporate in the suit 11 another electric circuit arrangement (not illustrated) which is electrically insulated and includes electric conductors which, using the Peltier effect, give rise to development or absorption of heat in predetermined zones of the suit, according to the direction of the current which passes through them.

By means of this Peltier-effect electric circuit arrangement, it is therefore possible to heat or cool, in part or totally, the body of the person wearing the suit.

The cooling of part or all of the body can be useful, for example, when transporting an injured person in an ambulance. Furthermore, the partial or total cooling of the body of the person can be advantageous in mitigating the effect of ambient conditions at high temperature.

In practice, numerous variations can of course be made with regard to what has been described and illustrated solely by way of non-limiting example.

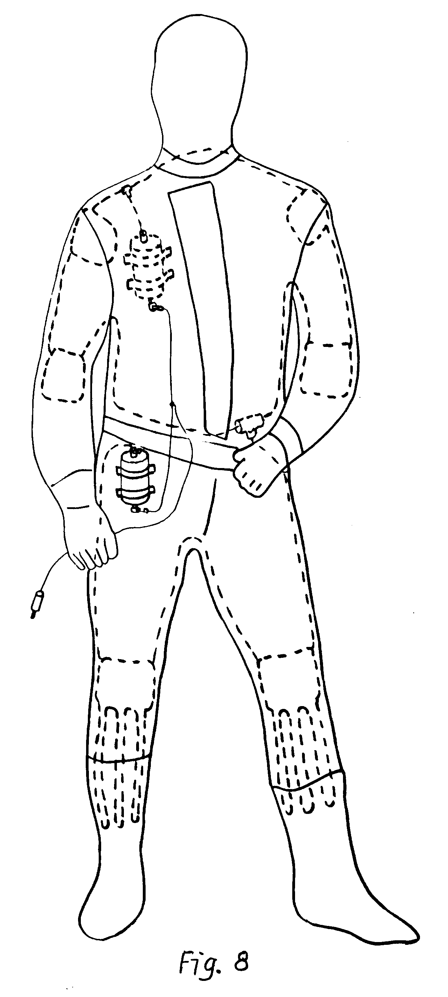

Thus, for example, it is possible to provide in the device according to the invention a number of independent pneumatic circuits leading to respective reservoirs of pressurized fluid, as well as a number of independent electric circuits to allow the user to choose, according to specific circumstances, the type of protection to adopt. In this way, for example, jacket and gloves, on the one hand, and trousers and ankle boots, on the other hand, may each include a respective pneumatic reservoir and a respective pneumatic circuit of inflatable protection cushions (as illustrated in Fig. 8) as well as a respective circuit with electric heating and/or cooling means, so that they can also be worn independently of one another. If desired, as illustrated by way of example in Fig. 8, these respective pneumatic circuits can also be interconnected pneumatically.

Furthermore, the means of protecting the body of the person, in the form of a garment, can take a variety of forms, for example leotards, to be worn under sports clothes.

The source of electric energy for supplying the electric heating and/or cooling means can consist, for example, of a battery of photovoltaic cells capable of converting solar radiation energy into electric energy.

## Claims

1. Safety device for a person transported on a vehicle or animal, characterized in that it comprsies:
a) a means (11) of at least partial protection of the body of the person, which means is pneumatically inflatable at least in part (11.3) and worn in the deflated state, like a garment;
b) at least one reservoir of pressurized fluid (12), for example compressed air, worn by the person and provided with valve means (12.2) which normally close its fluid outlet (12.1) in a sealed manner and are controlled by violent traction in order to bring about the pneumatic opening of the outlet, which is pneumatically connected in an airtight manner to said safety means, and
c) flexible means (13, 12.6), for example in the form of cord-like members, for connection between said vehicle or animal and said valve means of said at least one reservoir, said flexible means being intended to be separated from said at least one reservoir after having caused said valve means to open said fluid outlet of the reservoir pneumatically,
in such a manner that, when said person is involuntarily separated from said vehicle or animal, for example in the event of being thrown or falling from said vehicle or animal, this violently subjects said flexible connection means to traction and, therefore, said valve means pneumatically open, automatically and immediately, said outlet of pressurized fluid of said at least one reservoir so that said safety means is instantly inflated pneumatically in order to protect the person who - once the separation (at 12.6') of said flexible means of connection to said reservoir has taken place - is caused to follow a course which is independent of the vehicle or animal, while he is protected in said safety means which is pneumatically inflated at least in part.

2. Safety device according to Claim 1, characterized in that said safety means worn like a garment comprises at least one bag (11.3) which is inflatable like a pneumatic cushion, in the region of a corresponding part of the body to be protected, for example a joint, and also at least one flexible pipe (11.4, 11.6) for pneumatic connection of said bag to said at least one reservoir of pressurized fluid (12).

3. Safety device according to Claim 2, characterized in that it comprises a plurality of bags (11.3) which are inflatable like pneumatic cushions and connected pneumatically to one another and to said at least one reservoir of pressurized fluid by means of respective flexible pipes and pneumatic means (11.4, 11.4', 11.5) so as to form a pneumatic circuit (11.4'').

4. Safety device for a person transported on a vehicle or animal, characterized in that it comprises a means (11) of at least partial protection of the body of the person, worn like a garment and provided with electric heating (20, 23) and/or cooling means, and also means of electric connection of said electric heating (24.2, 24.3, P, Q) and/or cooling means to a source of electric energy, such as an electric accumulator battery (BT) or a photovoltaic cell battery.

5. Safety device according to Claim 4, in which said vehicle is provided with an engine and an accumulator battery (BT), which is electrically recharged by means of electric recharging means controlled by said engine, characterized in that said electric connection means (24.2, 24.3, P, Q) comprise a central control unit (CCP), to which said battery (BT) is electrically connected so as electrically to supply said electric heating and/or cooling means only above a given number of revolutions of the engine.

6. Safety device according to Claim 5, characterized in that, in said central control unit (CCP), an underload cutout (I1) and an engine speed control unit (UCG) are supplied electrically by said battery (BT), in that, in said engine speed control unit (UCG), frequency/voltage converter means (CFT) are provided, which pick up pulses from a means (R) for picking up pulses or synchronizing signals of the engine (for example, from the contact breaker) and convert their frequency into a level of electric voltage proportional to the frequency itself, and in that said level of electric voltage is applied to a first input of comparator means (CMP) while a level of voltage supplied by intervention threshold regulator means (RSI) is applied to another input of said comparator means (CMP) so that when the electric voltage level supplied by the frequency/voltage converter means (CFT) exceeds the electric voltage level supplied by the intervention threshold regulator means (RSI), a switching of logic state at the output of the comparator means (CMP) takes place, which in turn brings about the switching of the cutout (I1) so as to supply said electric heating (20, 23) and/or cooling means electrically, while operation in reverse takes place when the level of voltage supplied by (CFT) is lower than the level of voltage supplied by (RSI).

7. Safety device according to Claim 5, characterized in that said electric connection means (24.2, 24.3, P, Q) comprise a selection panel (PS), which makes it possible to control the electric supply to said electric heating (20, 23) and/or cooling means, selecting the part or the parts of the body to be heated or cooled, electrically supplying only some or all said electric heating and/or cooling means.

8. Safety device according to Claim 4, in which said vehicle is provided with an engine and an accumulator battery (BT), which is electrically recharged by means of electric recharging means controlled by said engine, characterized in that said electric connection means comprise inertia regulator means, for example inertial electric cutouts, which are electrically connected so as electrically to open and close the electric circuit branched from the battery (BT) to said electric heating and/or cooling means, according to the speed or number of revolutions of the engine.

9. Safety device according to Claim 4, characterized in that said electric heating (20, 23) and/or cooling means comprise insulated electric conductors (21, 23.1) which electrically connect resistors (22, 23.2) which are electrically insulated in said safety means in the form of a garment.

10. Safety device according to Claim 4, characterized in that said electric heating and/or cooling means comprise an electric circuit arrangement formed by an autoregulating heating cable, including for example two tinned copper conductors which have the sole function of supplying the cable and are incorporated in a core consisting of a polymer mixed with graphite particles which constitutes the heating part, an internal insulating sheath applied to said core and consisting of polyolefin or fluoropolymer, a tinned copper braiding on said sheath, which constitutes a mechanical protection and allows earthing of the cable, and an external sheath made of polyolefin or of fluoropolymer.

11. Safety device according to Claim 4, characterized in that said electric heating and/or cooling means comprise an electric circuit arrangement which uses the Joule effect in electric conductors to give rise to development of heat.

12. Safety device according to Claim 4, characterized in that said electric heating and/or cooling means comprise an electric circuit arrangement which uses the Peltier effect in electric conductors to give rise to development and/or absorb heat, according to the direction of the current which passes through them.
